# EUROPÄISCHE PATENTANMELDUNG

(11) **EP 1 316 408 A1**
(43) Veröffentlichungstag der Anmeldung: **04.06.2003**
(21) Anmeldenummer: 02025211.0
(22) Anmeldetag: 12.11.2002
(51) Int. Cl.: B29C 67/00, B22F 3/105

(54) **Vorrichtung zum Herstellen und/oder Bearbeiten von Bauteilen aus Pulverteilchen**

(30) Priorität: 28.11.2001 DE 10158169
(71) Anmelder: Concept Laser GmbH, 96215 Lichtenfels (DE)
(72) Erfinder: Herzog, Frank Carsten, 96215 Lichtenfels (DE); Herzog, Kerstin, 96215 Lichtenfels (DE)
(74) Vertreter: Hafner, Dieter, Dr. Dipl.-Phys.

(57) **Zusammenfassung**

Die Erfindung betrifft eine Vorrichtung 1 zum Herstellen und/oder Bearbeiten von Bauteilen 2 aus Pulverteilchen 3, insbesondere Sinter-, Stereolithographie-, Abtrag-, Beschriftungs- oder Oberflächenverdichtungs und/oder Glättungsverrichtung, wobei in einem Bauraum 4 der Vorrichtung eine Werkstückplattform 5 angeordnet ist, auf welche die Pulverteilchen 3 und/oder das Bauteil 2 gelagert sind und über welcher eine Lichtleiteinrichtung 6 vorgesehen ist, durch welche der Strahl 7 einer Energiequelle, insbesondere eines Lasers eingekoppelt wird, der auf Bereiche der Schicht 8, der Pulverteilchen 3 oder des entstehenden oder fertigen Bauteils 2 fokusierbar ist, sowie im Umfeld des Bauraums 4 eine Dosierkammer 9 angeordnet ist, in welcher Pulverteilchen 3 bevorratet und aus welcher diese in den Bauraum 4 durch eine Dosiervorrichtung 10, insbesondere eine Dosierrakeleinheit transportiert werden, wobei eine Pulverabführeinrichtung 11 mindestens eine Pulverentnahmeöffnung 12 des Bauraums 4 mit der Dosierkammer 9 zur Vermeidung manueller Pulverentnahme verbindet.

## Beschreibung

Die Erfindung betrifft eine Vorrichtung zur Herstellung und/oder zur Bearbeitung von Bauteilen aus Pulverteilchen, insbesondere Sintervorrichtung, Stereolithographievorrichtung, Abtragevorrichtung, Beschriftungsvorrichtung, Oberflächenverdichtungs- und/oder -glättungsvorrichtung. Eine derartige Vorrichtung weist in der Regel einen Bauraum auf, in dem eine Werkstückplattform angeordnet ist, auf welcher die Pulverteilchen und/oder das Bauteil gelagert sind. Über der Werkstückplattform ist eine Lichtleiteinrichtung vorgesehen, durch welche der Strahl einer Energiequelle, insbesondere eines Lasers eingekoppelt wird. Der eingekoppelte Laserstrahl wird auf die Pulverteilchen oder das entstehende oder fertige Bauteil fokusiert und ist dadurch geeignet, das Bauteil entstehen zu lassen oder zu bearbeiten. Im Umfeld des Bauraumes ist eine Dosierkammer angeordnet, in welcher Pulverteilchen bevorratet und aus welcher diese in den Bauraum durch eine Dosiervorrichtung, insbesondere eine Dosierrakeleinheit transportiert werden. Derartige Vorrichtungen sind beispielsweise aus DE 195 33 960 bekannt und generell mit dem Nachteil verbunden, daß nach dem Bau- oder Bearbeitungsvorgang das lose im Bauraum befindliche Pulver im wesentlichen manuell entnommen und in die Dosierkammer oder eine andere Vorratskammer zurücktransportiert werden muß. Dies ist umständlich, zeitraubend und gesundheitsgefährdend, da die verwendeten Sinterpulver in der Regel Feinstpulver sind, die zu einer Kontamination der Atemwege führen können.

Aus DE 199 37 260 A 1 ist ein Verfahren oder eine Vorrichtung zum Herstellen eines dreidimensionalen Objektes bekannt, bei welchem das Objekt innerhalb einer Prozeßkammer in einem Behälter durch aufeinanderfolgendes selektives Verfestigen von Schichten eines unter Einwirkung elektromagnetischer verfestigbaren pulverförmigen Materials gebildet wird. Nichtverfestigtes pulverförmiges Material wird nach dem Fertigstellen des Objektes gesteuert aus der Prozeßkammer entfernt.

Entferntes Pulver muß bei der bekannten Vorrichtung manuell wieder in die Dosierkammer der Vorrichtung eingebracht werden.

Der Erfindung liegt die Aufgabe zugrunde, eine Vorrichtung mit den Merkmalen des Oberbegriffes des Anspruches 1 derart weiterzubilden, daß die Pulverentfernung aus dem Bauraum und Befüllung der Dosierkammer mit geringerem Zeitaufwand vorgenommen werden kann, die Gesundheitsgefahr minimiert ist und ein Pulververlust weitgehend ausgeschlossen ist. Diese Aufgabe wird gemäß dem Kennzeichen des Anspruches 1 dadurch gelöst, daß die Pulverabführeinrichtung mindestens eine Pulverentnahmeöffnung des Bauraums mit der Dosierkammer zur unmittelbaren Überführung der Pulverteilchen in die Dosierkammer verbindet. Vorteilhafte Weiterbildungen der Erfindung ergeben sich aus den Unteransprüchen.

Kerngedanke der Erfindung ist, eine irgendwie geartete Verbindungsvorrichtung zu schaffen, die bei Bedarf geöffnet werden kann und durch die ein Pulverabtransport aus dem Bauraum i. w. unmittelbar in die Dosierkammer stattfinden kann. Der Transport kann im einfachsten Fall durch die auf das Pulver einwirkende Schwerkraft geschehen, wobei vorteilhafterweise gewisse Hilfsmittel unterstütztend eingesetzt werden können, beispielsweise eine vibrationserzeugende Einrichtung oder ein die Pulverteilchen verwirbelnder Luftstrom. Die Pulverabführeinrichtung kann eine Pulverleitung aufweisen, die die Pulverentnahmeöffnung des Bauraumes mit der Dosierkammer verbindet. In der Pulverleitung können Fördermittel unterschiedlicher Art vorgesehen sein, beispielsweise Förderschnecken, Förderräder, Förderbänder oder dergleichen. Es ist aber auch möglich, ein fluides Fördermedium wirksam werden zu lassen, das beispielsweise die Pulverleitung durchströmt. Beispielsweise kann hierzu ein Gasstrom in Betracht gezogen werden, der den Bauraum zumindest abschnittsweise durchströmt und die Pulverteilchen durch die Pulverleitung führt und garantiert, daß keine Partikel unkontrolliert verteilt werden. Die Pulverentnahmeöffnung ist vorteilhafterweise in dem unteren Wandungsbereich des Bauraums angeordnet. Dadurch kann vermieden werden, daß das Pulver umständlich aus dem Bauraum nach oben abgesaugt werden muß, was aber grundsätzlich auch im Rahmen der Erfindung liegt. In die Pulverabführeinrichtung kann eine Siebeinrichtung integriert werden, um Pulverclusterteilchen ab einem gewissen Durchmesser zur Aussonderung abzufangen. Wenn die Pulverentnahmeöffnung im unteren Bereich des Bauraumes angeordnet ist, ist es möglich, die Pulverentnahmeöffnung durch Absenken der Werkstückplattform zu öffnen oder freizugeben. Die Pulverabführeinrichtung kann auch eine Hebe- oder Absenkvorrichtung für die Dosierkammer und die Baukammer umfassen. Dann reduziert sich die Pulverabführeinrichtung zunächst im wesentlichen auf einen kurzen Pulverleitungsabschnitt, der von der Pulverentnahmeöffnung wegführt und so angeordnet ist, daß das Pulver unter dem Einfluß der Schwerkraft von oben in die Dosierkammer fallen kann. Ist der Entnahmevorgang abgeschlossen, wird die Dosierkammer oder die Dosierkammerplattform wieder in eine angehobene Stellung verfahren, in der die Dosierrakelvorrichtung wirksam werden kann.

Insbesondere in Verbindung mit Abtrag-, Beschriftungs- und Oberflächenverdichtungsund/oder -glättungsvorrichtungen ist eine automatische Pulverabführeinrichtung entsprechend der Erfindung besonders wertvoll. Zum einen werden bei Beschriftungsoder Abtragevorgängen Werkstückspäne erzeugt bzw. beim Sintern kleine Partikel zu größeren verschmolzen, die in der Baukammer zurückbleiben, die unter Umständen andere Durchmesser als die Pulverteilchen haben. Diese können dann mit Sicherheit ausgesondert werden. Auch haben solche Abtrage- oder Beschriftungsabfallprodukte bereits andere Schmelzpunkte, da sie bereits einmal einem Abschmelzvorgang unterzogen worden sind. Auch dies erfordert ein Absondern aus dem ursprünglichen Feinpulver. Darüber hinaus bietet sich die Möglichkeit an, die Herstellungs-, Beschriftungs- oder Oberflächenverdichtungsvorgang in einer Inertgasatmosphäre stattfinden zu lassen. Das Pulver kann unter Verwendung von Inertgas aus der Baukammer ausgespült werden, so daß Werkstückteile ohne Sauerstoffkontamination weiterbearbeitet werden können.

Die Erfindung ist anhand vorteilhafter Ausführungsbeispiele in den Zeichnungsfiguren näher erläutert. Diese zeigen
- Fig. 1: eine schematische Darstellung der wesentlichen Komponenten einer erfindungsgemäßen Vorrichtung in einer ersten Ausführungsform,
- Fig. 2: eine modifizierte Ausführungsform mit angehobener Dosierkammer sowie
- Fig.3: eine modifizierte Ausführungsform gemäß Fig. 2, jedoch mit abgesenkter Dosierkammer.
- Fig. 4: eine weitere modifizierte Ausführungsform der Vorrichtung, bei der zwei unmittelbar nebeneinanderliegende Kammern gleichberechtigt als Baukammer bzw. Dosierkammer dienen können, wobei die linke Kammer die Baukammer und rechte Kammer die Dosierkammer ist.
- Fig. 5: eine Ausführungsform gemäß Fig. 4, bei der die linke Kammer gerade die Dosierkammer und die rechte Kammer die Baukammer ist.
- Fig. 6: eine Ausführungsform gemäß den Figuren 4 und 5 mit einer Pulverentnahmevorrichtung in Form einer Absaugeinheit.
- Fig. 7: eine Ausführungsform gemäß Figuren 4 und 5, bei welcher die Pulverabführeinrichtung eine Pulverentnahmeöffnung umfaßt, die die beiden Kammern miteinander verbindet und die durch Absenkung der Plattform der als Baukammer dienenden Kammer freigeben wird, wobei die Plattform der als Dosierkammer dienenden Kammer soweit abgesenkt ist, daß der Füllstandspegel in dieser Kammer ebenfalls unterhalb der Entnahmeöffnung liegt.

Die Vorrichtung 1 dient zum Herstellen und/oder Bearbeiten von Bauteilen 2 aus Pulverteilchen 3 insbesondere durch einen Sintervorgang, Stereolithographievorgang oder zum Abtragen, zum Beschriften, zum Oberflächenverdichten und dergleichen. Dazu ist in einem Bauraum 4 eine Werkstückplattform 5 angeordnet, auf welcher die Pulverteilchen 3 oder ein Bauteil 2 gelagert sind. Über der Werkstückplattform 5 ist eine Lichtleiteinrichtung 6 angeordnet, die an einem nicht näher dargestellten Steuerungscomputer angeschlossen ist und durch welche der Strahl 7 einer nicht näher dargestellten Energiequelle, insbesondere eines Lasers eingekoppelt wird. Der Strahl kann auf Bereiche der Schicht 8, der Pulverteilchen 3 oder auf das entstehende oder fertige Bauteil 2 fokusiert werden. Im Umfeld des Bauraums 4 ist eine Dosierkammer 9 angeordnet, in welcher Pulverteilchen 3 bevorratet und aus welcher diese in den Bauraum 4 durch eine Dosiervorrichtung 10, insbesondere durch eine Dosierrakeleinheit transportiert werden können.

Im unteren Bereich des Bauraumes 4 ist eine Pulverabführeinrichtung 11 angeordnet, die mindestens eine Pulverentnahmeöffnung des Bauraumes mit der Dosierkammer 9 zur Vermeidung manueller Pulverentnahme verbindet.

Die Pulverabführeinrichtung 11 weist dabei mindestens eine Pulverleitung 13 auf, die die Pulverentnahmeöffnung 12 des Bauraumes 4 mit der Dosierkammer 9 verbindet. In der Pulverleitung 13 ist ein Fördermittel 14 angeordnet, das die Pulverteilchen mechanisch zur Dosierkammer 9 transportiert. Alternativ oder zusätzlich ist es auch möglich, ein Fördermedium wirksam werden zu lassen, beispielsweise einen Gasstrom, der die Pulverteilchen durch die Pulverleitung 13 treibt.

In die Pulverabführeinrichtung 11 ist eine Siebeinrichtung 15 integriert, um zusammenhängende Pulvercluster aus dem Feinstpulver auszusieben. Die Siebeinrichtung 15 kann in einem der Pulverentnahmeöffnung 12 zugeordneten und vibrierenden Auffangbehälter 16 untergebracht sein. Um das Pulver aus dem Bauraum 4 sicher in die Pulverleitung zu bringen und insbesondere am Werkstück oder an den Wandungen des Bauraumes haftende Pulverteilchen aus dem Bauraum auszutragen, kann der Luft- oder Gasstrom den Bauraum durchsetzen.

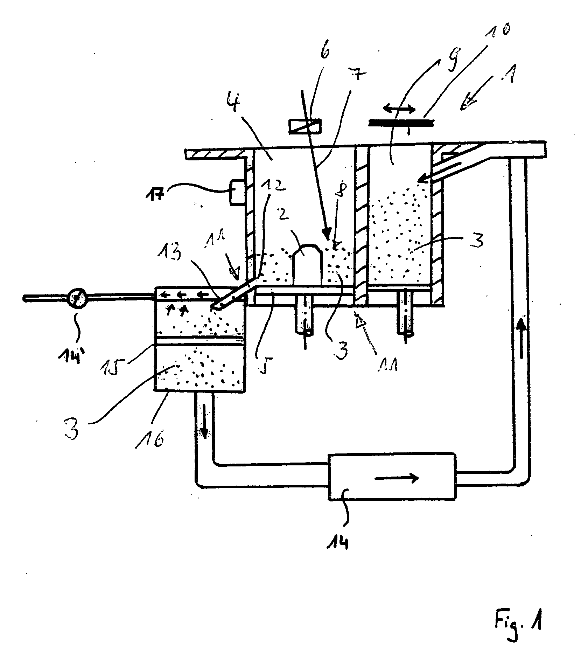

Zur Freigabe der Pulverentnahmeöffnung 12 für die Pulverabfuhr kann die Werkstückplattform 5 in eine abgesenkte Stellung verfahren werden, so wie dies in Fig. 1 dargestellt ist.

Es ist ferner möglich, zur Reinigung der Bauraumoberfläche von Pulverrückständen am oder im Bauraum eine mechanische Schwingervorrichtung wie beispielsweise einen Ultraschallschwinger 17 vorzusehen.

Das Fördermittel 14 kann ein Gebläse umfassen oder durch ein zusätzliches Gebläse 14' unterstützt werden.

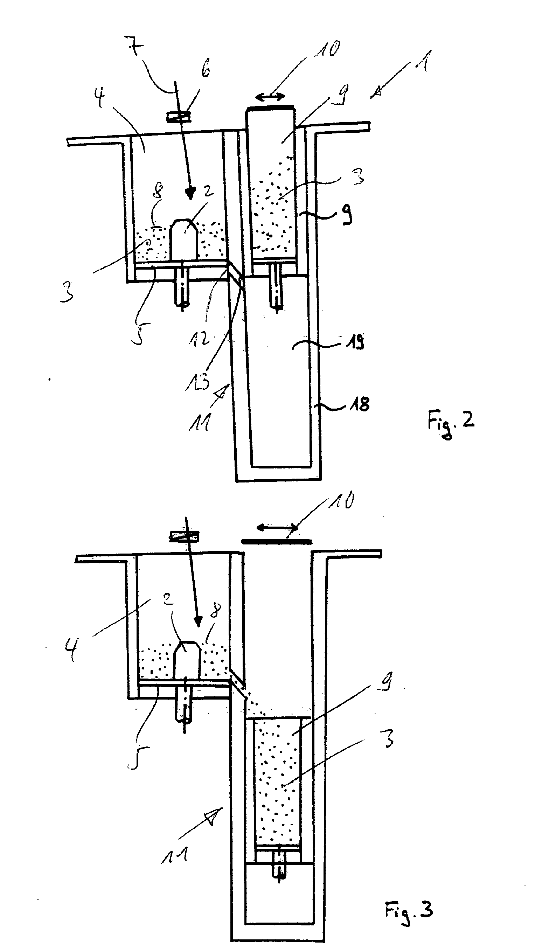

Bei dem in Fig. 2 dargestellten Ausführungsbeispiel umfaßt die Pulverabführeinrichtung eine Absenkvorrichtung 18 für die Dosierkammer 9, wobei die Absenkvorrichtung nach Art eines Schachtes 19 ausgebildet ist, in welchem die Dosierkammer von einer oberen Dosierstellung (Fig. 2) in eine untere Auffüllstellung (Fig. 3) gefahren werden kann.

Die Absenkvorrichtung kann motorisch angetrieben sein, es ist aber auch möglich, die Dosierkammer durch einen Handgriff aus der oberen Dosierstellung auszurasten und in eine untere Stellung zu verbringen und dann die Pulverabführeinrichtung zu öffnen oder zu aktivieren, damit das Feinstpulver aus dem Bauraum 4 in die Dosierkammer rückgefördert wird.

Nachfolgend wird auf die Zeichnungsfiguren 4 - 7Bezug genommen.

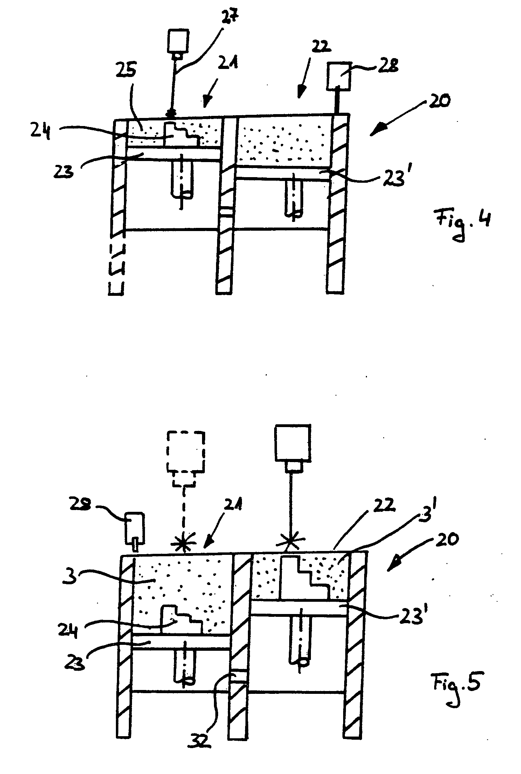

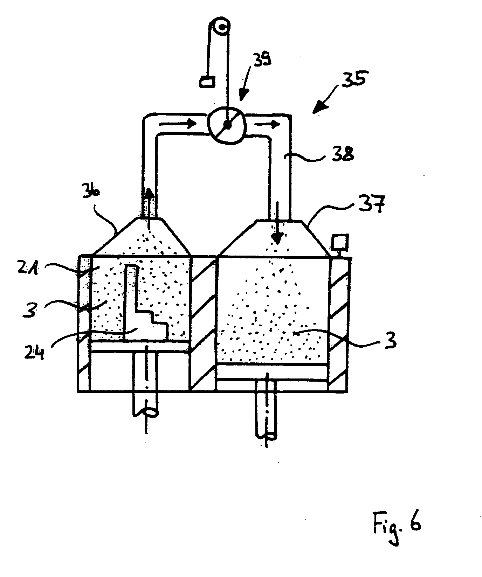

Die Figuren 4 und 5 zeigen zwei unmittelbar nebeneinanderliegende Kammern 21 und 22, wobei in Fig. 4 die Kammer 21 als Baukammer dient und die Kammer 22 als Dosierkammer. In der Baukammer der Vorrichtung 20 entsteht auf der Plattform 23 ein Werkstück 24 durch selektive Beaufschlagung der Pulverteilchen 25 in der Kammer 21 mit dem Laserstrahl 27. Nachdem eine Schicht selektiv fertiggelasert ist, wird durch den Dosierrakel 28 erneut aus der Kammer 22 Pulver in die Kammer 21 eingeschichtet.

Nach Fertigstellung des Bauteils kann es mit Pulver bedeckt in einer abgesenkten Stellung gemäß Fig. 5 auskühlen. Während dieser Zeit dient die Kammer 21 als Dosierkammer für die Kammer 22, in der während der Abkühlphase ein Werkstück 24' entstehen kann (Fig. 5). Dazu wird der Laser oder die Lichtleiteinrichtung über die Kammer 22 gefahren.

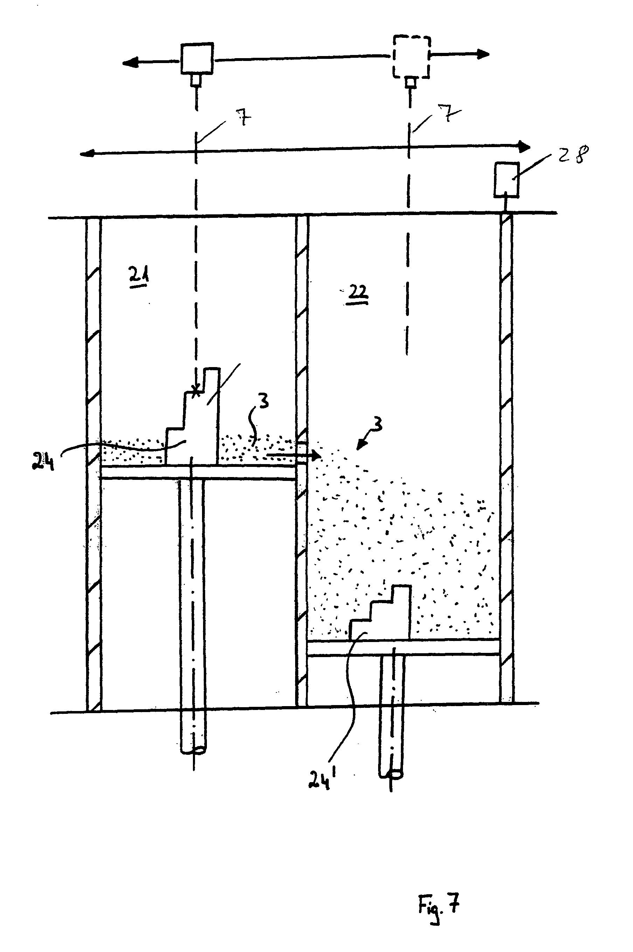

Sobald der Bauprozeß in der Kammer 22 beendet ist, wird die Plattform 23' der Kammer 22 in eine abgesenkte Stellung gefahren und zwar so weit, daß nicht verfestige Pulverteilchen 3 durch die Pulverentnahmeöffnung 32 auf die Pulverteilchen 3' der Kammer 22 fallen können, wozu die Plattform 23' so weit abgesentkt wird, wie dies in Fig. 7 dargestellt ist. Nach Entleerung der Kammer 21 kann das Bauteil 24 ohne Störung durch nicht verfestigte Pulverteilchen 3 entnommen werden. Das Bauteil 24', das in der Kammer 22 entstanden ist, kann einstweilen auskühlen.

Es sei angemerkt, daß die Erfindung auch Vorrichtungen umfaßt, bei denen nur eine der beiden Kammern 21 oder 22 als Baukammer und die andere als Dosierkammer verwendet wird, sofern die in Fig. 7 dargestellte Absenktechnik der Plattformen zur Pulverüberleitung von einer in die andere Kammer angewendet wird.

Bei dem in Fig. 6 dargestellten Ausführungsbeispiel erfolgt die Überleitung von nicht verfestigten Pulverteilchen von der Kammer 21 in die Kammer 22 durch eine Absaughaubeneinrichtung 35 bei sich, die zwei Absaugglocken 36, 37 und eine zwischen diesen wirksame Absaugleitung 38 umfaßt. In der Absaugleitung 38 ist ein Fördergebläse 39 angeordnet, das Pulverteilchen 3 von der Kammer 21 in die Kammer 22 fördern kann. Grundsätzlich ist es möglich, bei Umkehrung der Förderrichtung in der Absaugleitung 38 Pulverteilchen 3 von der Kammer 22 in die Kammer 21 zu fördern. Es liegt ebenfalls im Rahmen der Erfindung, im Bereich der Absaugleitung 38 Siebeinrichtungen vorzusehen, um Teilchen mit einem Querschnitt, der größer ist als ein zulässiger Sollquerschnitt auszufiltern, beispielsweise solche Teilchen, die miteinander verbunden sind, jedoch nicht mit dem Werkstück 24.

## Patentansprüche

1. Vorrichtung (1) zum Herstellen und/oder Bearbeiten von Bauteilen (2) aus Pulverteilchen (3), insbesondere Sinter-, Stereolithographie-, Abtrag-, Beschriftungs- oder Oberflächenverdichtungs und/oder Glättungsvorrichtung, wobei in einem Bauraum (4) der Vorrichtung (1) eine Werkstückplattform (5) angeordnet ist, auf welcher die Pulverteilchen (3) und/oder das Bauteil (2) gelagert sind und über welcher ein optisches Ausgangselement vorgesehen ist, durch welches der Strahl (7) einer Energiequelle, insbesondere eines Lasers eingekoppelt wird, der auf Bereiche der Schicht (8) der Pulverteilchen (3) oder des entstehenden oder fertigen Bauteils (2) fokusierbar ist, sowie im Umfeld des Bauraums (4) eine Dosierkammer (9) angeordnet ist, in welcher Pulverteilchen (3) bevorratet und aus welcher diese in den Bauraum (2) durch eine Dosiervorrichtung (10), insbesondere eine Dosierrakeleinheit transportiert werden und am Bauraum (4) eine Pulverabführeinrichtung (11) angeordnet ist,
**dadurch gekennzeichnet, daß**
die Pulverabführeinrichtung (11) mindestens eine Pulverentnahmeöffnung (12) des Bauraums (4) mit der Dosierkammer (9) zur unmittelbaren Überführung der Pulverteilchen (3) in die Dosierkammer (9) verbindet.

2. Vorrichtung nach Anspruch 1,
**dadurch gekennzeichnet, daß**
die Pulverabführeinrichtung (11) mindestens eine Pulverleitung (13) aufweist, die die Pulverentnahmeöffnung (12) des Bauraumes (4) mit der Dosierkammer (9) verbindet.

3. Vorrichtung nach einem der vorhergehenden Ansprüche,
**dadurch gekennzeichnet, daß**
in der mindestens einen Pulverleitung (13) mindestens ein Fördermittel (14) angeordnet oder ein Fördermedium wirksam ist.

4. Vorrichtung nach einem der vorhergehenden Ansprüche,
**dadurch gekennzeichnet, daß**
die mindestens eine Pulverentnahmeöffnung (12) in einem unteren Wandungsoder im Bodenbereich des Bauraums (4) angeordnet ist.

5. Vorrichtung nach einem der vorhergehenden Ansprüche,
**dadurch gekennzeichnet, daß**
in die Pulverabführeinrichtung (11) eine Siebeinrichtung (15) integriert ist.

6. Vorrichtung nach einem der vorhergehenden Ansprüche,
**gekennzeichnet durch**
einen der Pulverentnahmeöffnung (12) zugeordneten Auffangbehälter (16).

7. Vorrichtung nach Anspruch 3,
**dadurch gekennzeichnet, daß**
zum Transport der Pulverteilchen (3) aus dem Bauraum (4) in die Pulverabführeinrichtung (11) ein den Bauraum (4) durchsetzender Luftstrom vorgesehen ist.

8. Vorrichtung nach einem der vorhergehenden Ansprüche,
**dadurch gekennzeichnet, daß**
zur Freigabe der Pulverentnahmeöffnung (12) für die Pulverabfuhr die Werkstückplattform (5) in eine abgesenkte Stellung verfahrbar ist.

9. Vorrichtung nach einem der vorhergehenden Ansprüche,
**dadurch gekennzeichnet, daß**
zur Reinigung der Bauraumoberflächen von Pulverrückständen am/im Bauraum (4) und/oder an der Pulverabführeinrichtung (11) und/oder an der Auffangvorrichtung eine mechanische Schwingervorrichtung (17) angeordnet ist.

10. Vorrichtung nach einem der vorhergehenden Ansprüche,
**dadurch gekennzeichnet, daß**
das Fördermittel (14) ein Fördergebläse (39) umfaßt.

11. Vorrichtung nach einem der vorhergehenden Ansprüche,
**dadurch gekennzeichnet, daß**
sie mindestens ein die Pulverteilchen (3) mechanisch transportierendes Förderelement (Förderrad, Förderschnecke, Förderband) umfaßt.

12. Vorrichtung nach einem der vorhergehenden Ansprüche,
**dadurch gekennzeichnet, daß**
die Pulverabführeinrichtung (11) eine Hebe- oder Absenkvorrichtung für die Dosierkammer (9) und/oder den Bauraum (4) umfaßt.

13. Vorrichtung nach einem der vorhergehenden Ansprüche,
**dadurch gekennzeichnet, daß**
nach der Pulverentnahmeöffnung (12) ein Sammeltrichter angeordnet ist.

14. Vorrichtung nach einem der vorhergehenden Ansprüche,
**dadurch gekennzeichnet, daß**
die Ausgangsöffnung des Sammeltrichters eine Zuflußöffnung der abgesenkten Dosierkammer (9) überdeckt.

15. Vorrichtung nach einem der vorhergehenden Ansprüche,
**dadurch gekennzeichnet, daß**
der Bauraum (4) als Dosierkamer (9) und die Dosierkammer (9) als Bauraum (4) einsetzbar sind.

16. Vorrichtung nach Anspruch 15,
**dadurch gekennzeichnet, daß**
beide Räume (4, 9) unmittelbar nebeneinander in einem Gehäuse der Vorrichtung (1) angeordnet sind.
